# EUROPEAN PATENT APPLICATION

(11) **EP 4 807 735 A1**
(43) Date of publication of application: **16.09.2026**
(21) Application number: 26164187.2
(22) Date of filing: 12.03.2026
(51) Int. Cl.: G10L 15/22, G10L 15/26

(54) **HISTORY MANAGEMENT APPARATUS, COMMUNICATION SYSTEM, HISTORY MANAGEMENT METHOD, AND CARRIER MEANS**

(30) Priority: 14.03.2025 JP 2025041706; 26.01.2026 JP 2026010234
(71) Applicant: Ricoh Company, Ltd., Tokyo 143-8555 (JP)
(72) Inventor: IWASHITA, Shinya, Tokyo, 143-8555 (JP); KIMURA, Yuta, Tokyo, 143-8555 (JP); YAMASHITA, Tomohiro, Tokyo, 143-8555 (JP); NOZOE, Futaba, Tokyo, 143-8555 (JP); MURATA, Haruki, Tokyo, 143-8555 (JP)
(74) Representative: SSM Sandmair

(57) **Abstract**

A history management apparatus (3) for managing a history of speech of a user, includes: a reception unit (31) configured to receive voice data transmitted by a communication terminal that collects sound; a voice text generation unit (32) configured to generate a voice text based on the voice data; a position measurement unit (33) configured to measure a position of the communication terminal based on the voice data; a grouping unit (36) configured to group a plurality of voice texts relating to the voice data transmitted by the communication terminal into a group in response to a speech being made in a specific time zone and in a predetermined range based on the position of the communication terminal; and a creation unit (38) configured to create a speech history of the group.

## Description

### BACKGROUND

### Technical Field

The present disclosure relates to a technique for managing a history of speech of a user in a speech space.

### Related Art

With the improvement of voice recognition technology, a minutes creation service that records speech in a conference with a microphone and automatically creates minutes has been provided.

For example, Japanese Patent No. 5751143 discloses a system that individually acquires voice with a microphone worn by each participant of a conference to extract a significant portion of speech in the conference and create minutes. When a position and a direction are identified by, for example, an infrared sensor, an electronic compass, or a Global Positioning System (GPS) controller worn by each participant and voice is detected in a pair of participants who are located in the vicinity of each other and face each other, the system can determine a state in which speech between the participants of the conference is established.

However, with Japanese Patent No. 5751143, the user has to move to an environment (for example, a conference room) provided with a specific recording facility and turn on a recording start switch of the microphone or set a Web conference. Thus, it has been difficult to manage a history of speech of a plurality of users that incidentally occurs in a shared space, a hallway, or another place of an office.

### SUMMARY

The present disclosure described herein provides a history management apparatus that manages a history of speech of a user, including a reception unit that receives voice data transmitted by a communication terminal that collects sound; a voice text generation unit that generates a voice text based on the voice data; a position measurement unit that measures a position of the communication terminal based on the voice data; a grouping unit that groups a plurality of voice texts relating to the voice data transmitted by the communication terminal into a group in response to a speech being made in a specific time zone and in a predetermined range based on the position of the communication terminal; and a creation unit that creates a speech history of the group.

The present disclosure described herein provides a communication system including the above-described history management apparatus and the communication terminal.

The present disclosure described herein provides a history management method performed by a computer that manages a history of speech of a user, the method including receiving voice data transmitted by a communication terminal that collects sound; generating a voice text based on the voice data; measuring a position of the communication terminal based on the voice data; grouping a plurality of voice texts relating to the voice data transmitted by the communication terminal into a group in response to a speech being made in a specific time zone and in a predetermined range based on the position of the communication terminal; and creating a speech history of the group.

The present disclosure described herein provides carrier means carrying computer readable code for controlling the computer to carry out the above-described method.

According to one aspect of the present disclosure, a history of speech of one or more users can be grouped and managed.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of an overall configuration of a communication system;
FIG. 2 is a configuration diagram of an example of hardware of a history management apparatus and a user terminal;
FIG. 3 is a diagram of an example of a hardware configuration of a wireless tag;
FIG. 4 is a diagram of an example of a hardware configuration of a relay apparatus;
FIG. 5 is a functional configuration diagram of the communication system according to a first embodiment;
FIG. 6 is an example of a voice management table;
FIG. 7 is an example of a user management table;
FIG. 8 is an example of a group speech history management table;
FIG. 9 is a sequence diagram illustrating processes in which the history management apparatus acquires voice data and detection data from the wireless tag and manages the voice data and the detection data according to the first embodiment;
FIG. 10 is a sequence diagram illustrating a process of creating a group speech history screen according to the first embodiment;
FIG. 11 is a view of an example of a creation request screen for a group speech history;
FIG. 12 is a view of an example of a group speech history screen on which voice text of transcription is displayed;
FIG. 13 is a flowchart presenting the process of creating the group speech history screen according to the first embodiment;
FIG. 14 is a sequence diagram illustrating an example of the process of creating the group speech history screen;
FIG. 15 is a view of an example of the group speech history screen on which voice text of transcription is displayed;
FIG. 16 is a view of an example of the group speech history screen on which summary text is displayed;
FIG. 17 is a sequence diagram illustrating a process of creating a group speech history screen according to a second embodiment; and
FIG. 18 is a flowchart presenting the process of creating the group speech history screen according to the second embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

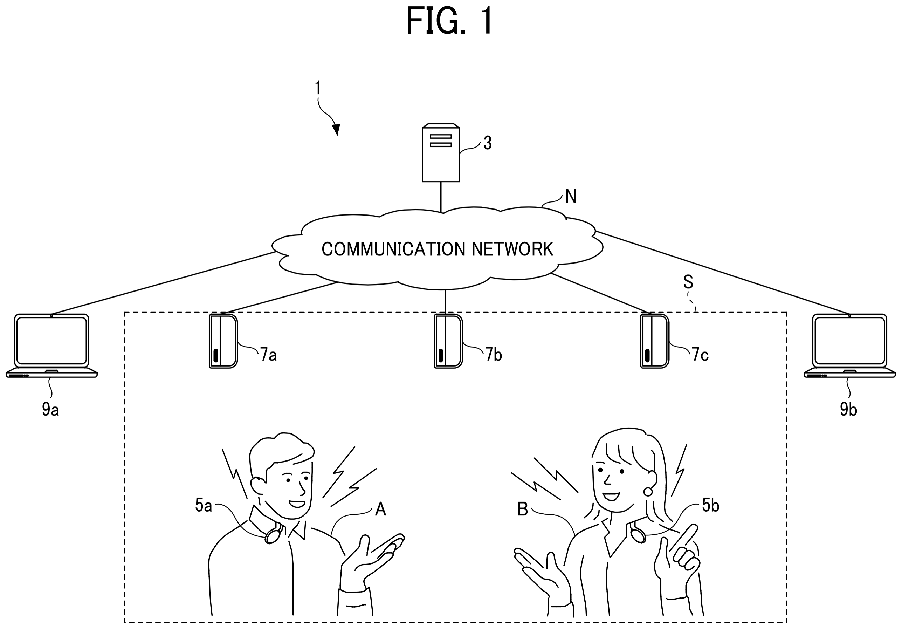

A first embodiment will be described with reference to FIGS. 1 to 16.

### Overall Configuration of Communication System

A description is now given of an overall configuration of a communication system 1 with reference to FIG. 1. FIG. 1 is a diagram illustrating the overall configuration of the communication system 1.

FIG. 1 illustrates a state in which speech (conversation) between a user A and a user B spontaneously starts in a speech (conversation) space S. The speech space S includes a conference room and a space other than a space dedicated to conversation, such as a shared space or a hallway of an office. The conversation that spontaneously starts in the speech space is, for example, conversation that starts without an intention when the user A and the user B pass each other through a hallway.

The user A wears a wireless tag 5a with a built-in microphone. Similarly, the user B wears a wireless tag 5b with a built-in microphone. The wireless tags 5a and 5b are collectively referred to as a "wireless tag 5." The wireless tag 5 is an example of a communication terminal. Examples of the communication terminal include an active radio frequency identification (RFID) tag, an ultra wide band (UWB) tag, a smartphone, and a mobile phone.

A plurality of relay apparatuses 7a, 7b, and 7c such as routers of wireless Wi-Fi^{®} are installed on the ceiling of the speech space S. The relay apparatuses 7a, 7b, and 7c are collectively referred to as a "relay apparatus 7."

In FIG. 1, a user terminal 9a such as a personal computer (PC) used by the user A is illustrated. Similarly, a user terminal 9b such as a PC used by the user B is illustrated. The user terminals 9a and 9b are collectively referred to as a "user terminal 9."

A history management apparatus 3 is a computer that manages a history of speech of a user and creates, for example, minutes based on the history. The history management apparatus 3 can communicate with the relay apparatus 7 and the user terminal 9 via a communication network N such as the Internet or a local area network (LAN). The wireless tag 5 can communicate with the history management apparatus 3 via the relay apparatus 7.

### Hardware Configurations

### Hardware Configurations of History Management Apparatus and User Terminal

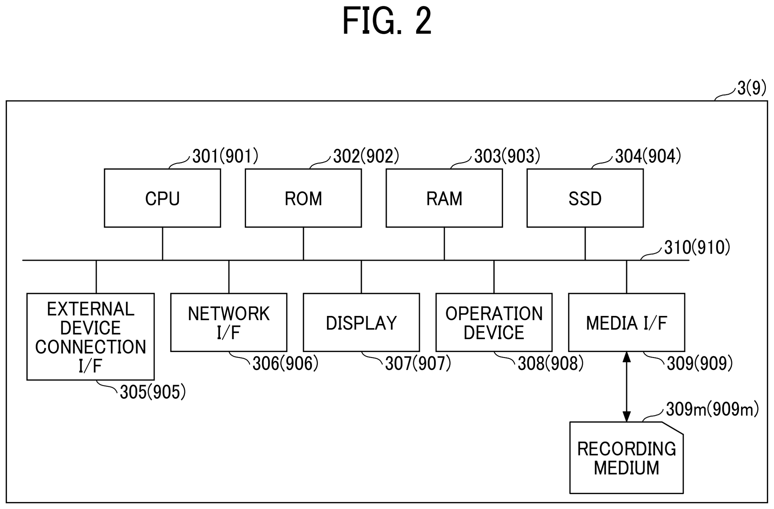

Hardware configurations of the history management apparatus 3 and the user terminal 9 will be described with reference to FIG. 2. FIG. 2 is a hardware configuration diagram of the history management apparatus 3 or the user terminal 9.

As illustrated in FIG. 2, the history management apparatus 3 is a computer including a central processing unit (CPU) 301, a read-only memory (ROM) 302, a random-access memory (RAM) 303, a solid state drive (SSD) 304, an external device connection interface (I/F) 305, a network I/F 306, a display 307, an operation device 308, a media I/F 309, and a bus line 310.

The CPU 301 controls the operation of the entire history management apparatus 3. The ROM 302 stores programs such as an initial program loader (IPL) for booting the CPU 301. The RAM 303 is used as a work area for the CPU 301.

The SSD 304 reads or writes various types of data under the control of the CPU 301. The history management apparatus 3 or the user terminal 9 may include a hard disk drive (HDD) in place of the SSD 304.

The external device connection I/F 305 is an interface for connecting various external devices. The external devices include, but are not limited to, a display, a speaker, a keyboard, a mouse, a Universal Serial Bus (USB) memory, and a printer.

The network I/F 306 is an interface for performing data communication via the communication network N.

The display 307 is a type of display device such as a liquid crystal display or an organic electroluminescent (EL) display that displays various images.

The operation device 308 is an example of input means operated by a user to select or execute various instructions, select a target for processing, or move a cursor being displayed. Examples of the input means include various operation keys, a power switch, a shutter button, and a touch panel.

The media I/F 309 controls reading or writing (storing) data from or to a recording medium 309m such as a flash memory. Examples of the recording medium 309m include a digital versatile disc (DVD) and a Blu-ray Disc^{®}.

The bus line 310 is, for example, an address bus or a data bus, which electrically connects the components or elements such as the CPU 301.

Since the hardware configuration of the user terminal 9 is similar to that of the history management apparatus 3, the reference numerals of the components or elements of the user terminal 9 in FIG. 2 are indicated while being changed from the 300-series to the 900-series.

### Hardware Configuration Diagram of Wireless Tag

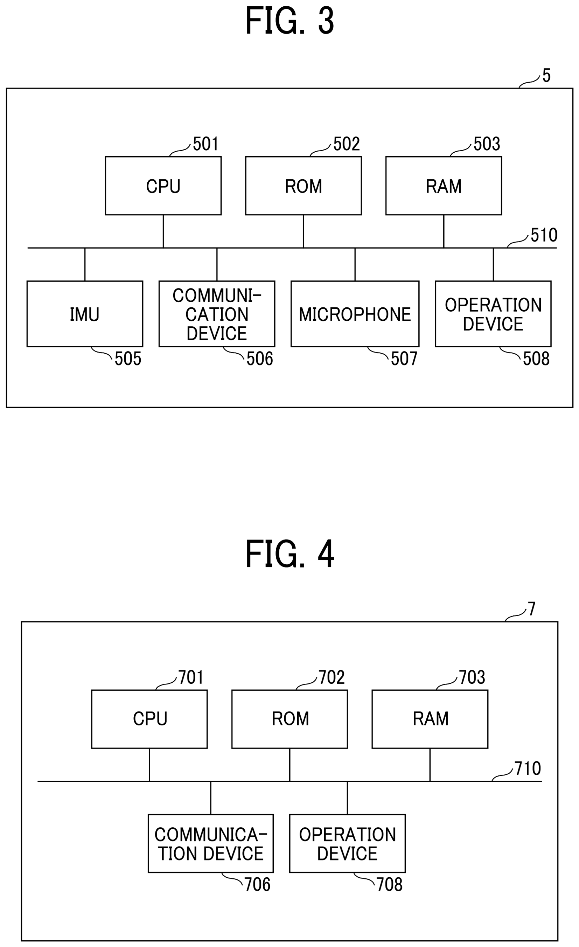

A hardware configuration of the wireless tag 5 will be described with reference to FIG. 3. FIG. 3 is a hardware configuration diagram of the wireless tag 5.

As illustrated in FIG. 3, the wireless tag 5 includes a CPU 501, a ROM 502, a RAM 503, an inertial measurement unit (IMU) 505, a communication device 506, a microphone 507, an operation device 508, and a bus line 510. Since the CPU 501, the ROM 502, the RAM 503, and the bus line 510 have configurations similar to those of the CPU 301, the ROM 302, the RAM 303, and the bus line 310 described above, respectively, the description thereof will be omitted.

The IMU 505 outputs inertial measurement data as a result of measuring an acceleration and an angular velocity with high accuracy. The IMU 505 may be omitted.

The communication device 506 emits radio waves using a battery provided in the wireless tag 5. Thus, the communication device 506 can communicate with the relay apparatus 7. The communication distance is several tens of meters to several hundreds of meters.

The microphone 507 collects sound such as voice and outputs an analog audio signal. The audio signal is converted into digital voice data by the CPU 501 processing and output from the communication device 506.

The operation device 508 detects, for example, a touch operation performed by a user. As a result, digital detection data is output from the communication device 506. In FIG. 1, for example, when the user A has an impression or sympathy during speech (conversation) and has speech content that the user A wants to look back and check in minutes later, and when the user A touches the surface of the wireless tag 5a, the operation device 508 detects the touch. The user ID of the user who performs, for example, the touch operation is registered as the user ID of a marking person in a voice management database (DB) 41, which will be described later.

### Hardware Configuration Diagram of Relay Apparatus

A hardware configuration of the relay apparatus 7 will be described with reference to FIG. 4. FIG. 4 is a hardware configuration diagram of the relay apparatus 7.

As illustrated in FIG. 4, the relay apparatus 7 includes a CPU 701, a ROM 702, a RAM 703, a communication device 706, an operation device 708, and a bus line 710. Since the CPU 701, the ROM 702, the RAM 703, and the bus line 710 have configurations similar to those of the CPU 301, the ROM 302, the RAM 303, and the bus line 310 described above, respectively, the description thereof will be omitted. Instead of the RAM 704, for example, a non-volatile dynamic random access memory (DRAM) may be used.

The communication device 706 transmits the voice data received from the wireless tag 5 to the history management apparatus 3. The communication device 706 transmits the detection data received from the wireless tag 5 to the history management apparatus 3.

The operation device 708 receives operations for performing various settings of the relay apparatus 7.

### Functional Configurations of Communication System

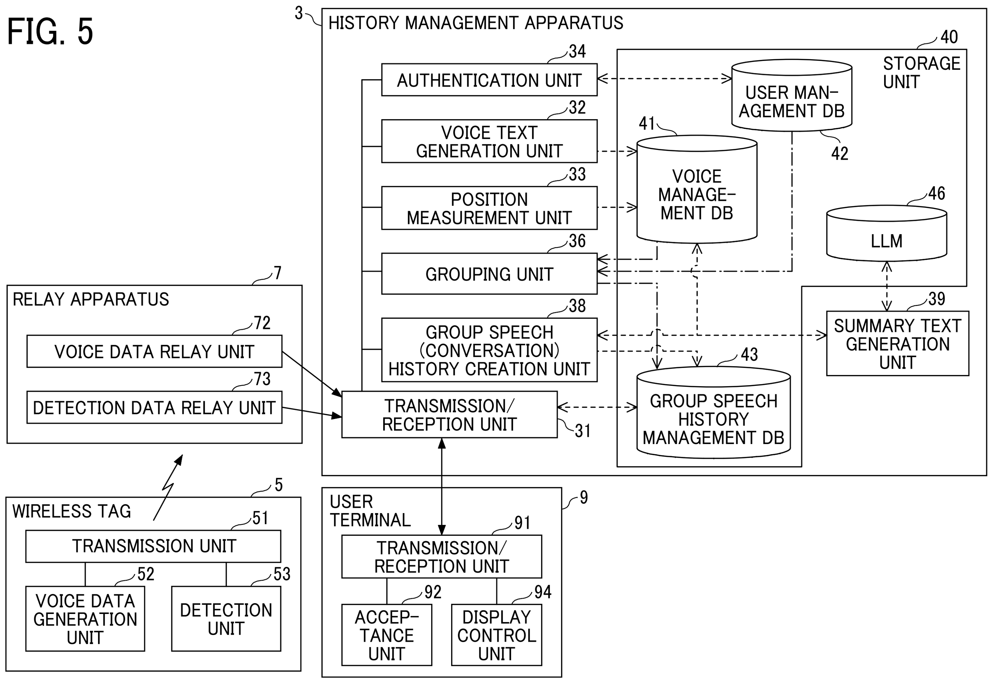

Functional configurations of the apparatuses (the history management apparatus 3, the wireless tag 5, the relay apparatus 7, and the user terminal 9) included in the communication system 1 will be described with reference to FIG. 5. FIG. 5 is a diagram illustrating a functional configuration of the communication system 1 according to the first embodiment.

### Functional Configuration of Wireless Tag

The wireless tag 5 will be described first. As illustrated in FIG. 5, the wireless tag 5 includes a transmission unit 51, a voice data generation unit 52, and a detection unit 53. These units are functions or means implemented by or caused to function by operating any of the hardware elements illustrated in FIG. 3 in cooperation with the instructions of the CPU 501 according to the control program loaded to the RAM 503. A desired battery such as a coin-shaped lithium battery for driving the wireless tag 5 is provided in the wireless tag 5.

### Functional Configurations

The transmission unit 51 transmits data to an external device (e.g., the relay apparatus 7) of the wireless tag 5. The transmission unit 51 may be referred to as an emission unit.

The voice data generation unit 52 generates voice data based on the audio signal of voice collected by the microphone 507. The voice data is transmitted (emitted) to the relay apparatus 7 by the transmission unit 51. The detection unit 53 detects a touch on the operation device 508 performed by the user and generates detection data. The detection data is transmitted (emitted) to the relay apparatus 7 by the transmission unit 51.

### Functional Configuration of Relay Apparatus

The relay apparatus 7 will be described below. As illustrated in FIG. 5, the relay apparatus 7 includes a voice data relay unit 72 and a detection data relay unit 73. These units are functions or means implemented by or caused to function by operating any of the hardware elements illustrated in FIG. 4 in cooperation with the instructions of the CPU 701 according to the control program loaded to the RAM 703.

### Functional Configurations

The voice data relay unit 72 transmits the voice data received from the wireless tag 5 to the history management apparatus 3 to relay the voice data.

The detection data relay unit 73 transmits the detection data received from the wireless tag 5 to the history management apparatus 3 to relay the detection data.

### Functional Configuration of History Management Apparatus

The history management apparatus 3 will be described below. As illustrated in FIG. 5, the history management apparatus 3 includes a transmission/reception unit 31, a voice text generation unit 32, a position measurement unit 33, an authentication unit 34, a grouping unit 36, a group speech history creation unit 38, and a summary text generation unit 39. These units are functions or means implemented by or caused to function by operating any of the hardware elements illustrated in FIG. 2 in cooperation with the instructions of the CPU 301 according to the control program loaded from the SSD 304 to the RAM 303.

The history management apparatus 3 includes a storage unit 40 implemented by the RAM 303 or the SSD 304.

### Voice Management DB

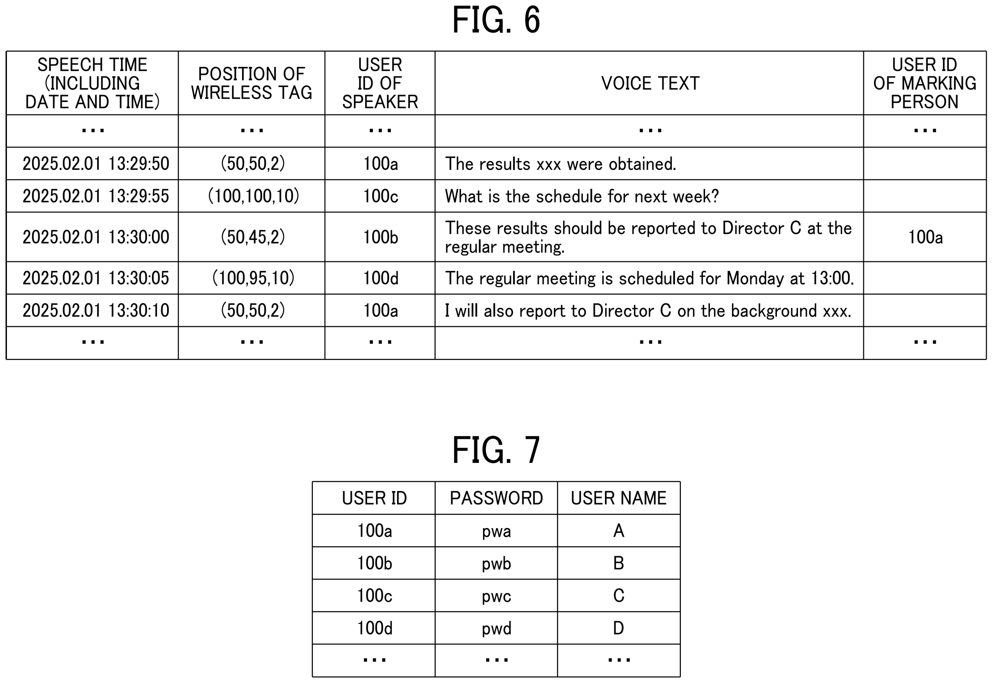

The storage unit 40 stores a voice management DB 41. The voice management DB 41 includes a voice management table presented in FIG. 6. FIG. 6 is the voice management table.

As presented in FIG. 6, the voice management table includes items of speech time (including date and time), position of wireless tag, user ID of speaker, voice text, and user ID of marking person managed in association with one another.

The "speech time (including date and time)" indicates the time at which the user speaks. The speech time is, for example, a reception time (including date and time) at which the transmission/reception unit 31 receives voice data transmitted from the wireless tag 5 via the relay apparatus 7. When a transmission (emission) time is added to the voice data by the wireless tag 5 or a relay time is added to the voice data by the relay apparatus 7, the transmission (emission) time or the relay time may be used as the speech time.

The "position of wireless tag" indicates the position (position information) of the wireless tag 5 measured by the position measurement unit 33. The position information indicating the position may be indicated based on coordinate values as presented in FIG. 6, or may be indicated based on area information for distinguishing conference rooms. For example, it is conceivable that position measurement based on coordinate values is suitable for a facility such as a cafe space in which a plurality of conversation tables (desks) are present in an open space, and position measurement based on an area in units of rooms is suitable for a facility in which many conference rooms are present in such a manner that the conference rooms are divided by walls.

The "user ID of speaker" is a user ID of a speaker added to the voice data in the wireless tag 5, and is an example of speech user identification information for identifying a user who is an owner of the wireless tag 5.

The "voice text" indicates voice text (text indicating voice content) generated from the voice data by the voice text generation unit 32.

The "user ID of marking person" is a user ID added to the detection data, and is an example of marking user identification information for identifying a user who touches the wireless tag 5 (performs a marking operation).

### User Management DB

The storage unit 40 stores a user management DB 42. The user management DB 42 includes a user management table presented in FIG. 7. FIG. 7 is the user management table.

As presented in FIG. 7, the user management table includes items of user ID, password, and user name managed in association with one another. The user ID is an example of user identification information.

### Group Speech History Management DB

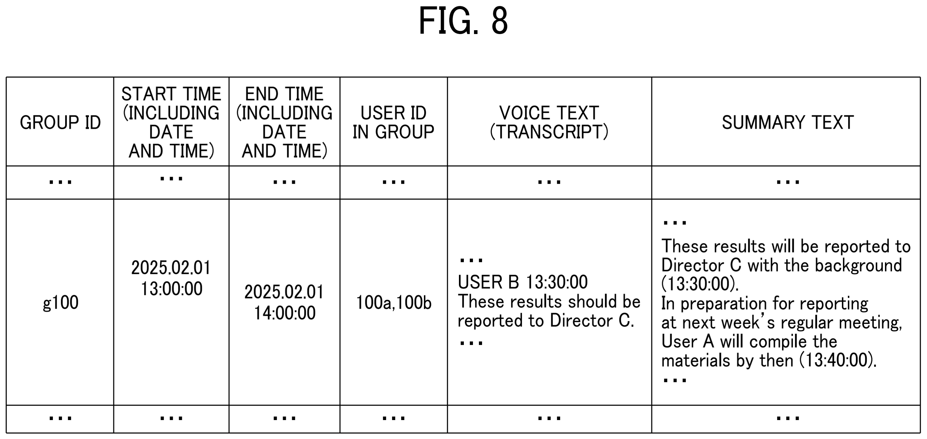

The storage unit 40 stores a group speech history management DB 43. The group speech history management DB 43 includes a group speech history management table presented in FIG. 8. FIG. 8 is the group speech history management table.

As presented in FIG. 8, the group speech history management table includes items of group ID, start time (including date and time), end time (including date and time), user ID in group, voice text (transcript), and summary text managed in association with one another.

The "group ID" is an example of group identification information for identifying a group including a plurality of users having conversation. The "group" indicates a unit of conversation held by a plurality of users who are present in the same speech space in a specific time zone and actually speak in the specific time zone. The group is not a set of participants defined as a conference in advance, but is dynamically determined based on the start and end of conversation and the state (e.g., the position) of a user.

When a plurality of users start speech in the speech space S illustrated in FIG. 1, the "start time (including date and time)" indicates a time at which the plurality of users in the group created (determined) by the group speech history creation unit 38 start speech.

The "end time (including date and time)" indicates a time at which the plurality of users in the group created (determined) by the group speech history creation unit 38 end speech.

The "user ID in group" is a user ID of a user in a group created (determined) when a predetermined condition is satisfied.

The "voice text" is text (voice text indicating voice content) generated (transcribed) by the voice text generation unit 32 based on voice data of content of speech made in the above-described group. The voice text includes a user name of a user who is a speaker and a speech time (a reception time of voice data received by the transmission/reception unit 31) managed in association with each other. The user name managed by the user management DB 42 is used as the user name.

The "summary text" indicates summary text (sentence) generated based on the voice text by the summary text generation unit 39. Each text (sentence) in the summary text is associated with the above-described speech time of the user and managed.

### LLM

The storage unit 40 stores a large language model (LLM) 46 used to summarize text. The LLM 46 is an example of a trained machine learning model.

At least one of the voice management DB 41, the user management DB 42, the group speech history management DB 43, and the LLM 46 may be stored in an external server instead of the history management apparatus 3.

### Functional Configurations

The transmission/reception unit 31 transmits or receives data to or from an external device (e.g., the wireless tag 5) of the history management apparatus 3 via the relay apparatus 7 and the communication network N. The transmission/reception unit 31 transmits or receives data to or from an external device (e.g., the user terminal 9) of the history management apparatus 3 via the communication network N.

The voice text generation unit 32 performs voice recognition and generates voice text obtained by converting voice content indicated by voice data into text.

The position measurement unit 33 measures the position of the wireless tag 5 based on the signal intensity of each item of voice data received from the wireless tag 5 via the relay apparatus 7. For example, as illustrated in FIG. 1, the position measurement unit 33 measures the position of the wireless tag 5 by three-point position measurement based on the signal intensity (level) of items of data received from one wireless tag 5 via the three relay apparatuses 7a, 7b, and 7c. The position measurement unit 33 may be also referred to as a "position determination unit" that determines a position.

The authentication unit 34 performs user authentication using the user management DB 42.

The grouping unit 36 estimates that conversation of users is established when voice texts of users are managed as a conversation (speech) history in the same place in the same time zone in the voice management DB 41. Thus, the grouping unit 36 groups the users. For example, the same time zone indicates a certain period of time such as 13:00 to 14:00 of the speech time. The same place indicates a state in which the positions of wireless tags 5 of a plurality of users are included within a predetermined distance such as within 1 m.

Based on voice data of a plurality of users grouped by the grouping unit 36, the group speech history creation unit 38 creates a history of conversation in the group. In this case, the group speech history creation unit 38 may be also referred to as a "group conversation history creation unit."

The group speech history creation unit 38 groups a plurality of voice texts indicating conversation content of a plurality of users. In addition, the group speech history creation unit 38 may group a plurality of voice texts generated by a plurality of speeches of a user such as when the user makes speech of content that the user incidentally remembers or proposes in the same time zone.

The summary text generation unit 39 generates summary text from voice text using the LLM 46.

### Functional Configuration of User Terminal

A functional configuration of the user terminal 9 will be described below. As illustrated in FIG. 5, the user terminal 9 includes a transmission/reception unit 91, an acceptance unit 92, and a display control unit 94. These units are functions or means implemented by or caused to function by operating any of the hardware elements illustrated in FIG. 2 operates in cooperation with the instructions of the CPU 901 according to the control program loaded to the RAM 903.

### Functional Configurations

The transmission/reception unit 91 transmits or receives data to or from an external device (e.g., the history management apparatus 3) of the user terminal 9.

The acceptance unit 92 accepts an operation (e.g., a touch) on the operation device 908 performed by the user.

The display control unit 94 performs control for displaying a screen on the display 907. The display 907 is an example of a display device.

### Processes of First Embodiment

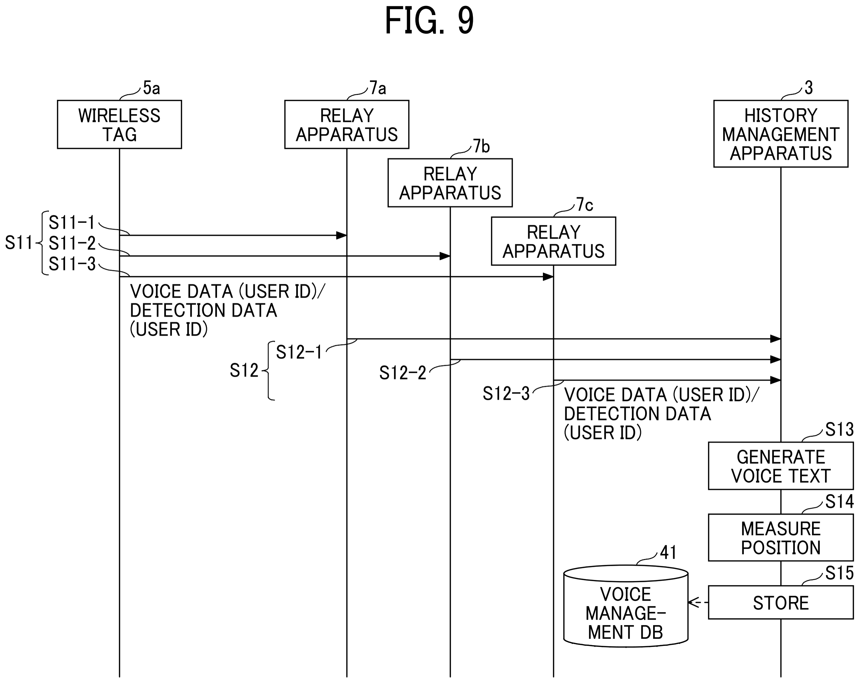

Processes according to the first embodiment will be described with reference to FIGS. 9 to 16.

### Acquisition of Voice Data and Detection Data

Processes in which the history management apparatus 3 acquires voice data and detection data from each wireless tag 5 and manages the voice data and the detection data will be described with reference to FIG. 9. FIG. 9 is a sequence diagram illustrating the processes in which the history management apparatus 3 acquires voice data and detection data from the wireless tag 5 and manages the voice data and the detection data according to the first embodiment. Hereinafter, as illustrated in FIG. 1, a case where the user A wearing the wireless tag 5a enters the speech space S and speech (conversation) with the user B wearing the wireless tag 5b starts will be described. While the process of the wireless tag 5a of the user A as the wireless tag 5 is illustrated in FIG. 9, the process of the wireless tag 5b of the user B is similar, and hence the description thereof will be omitted.

S11: The transmission unit 51 of the wireless tag 5a transmits (emits) voice data generated by the voice data generation unit 52 or detection data generated by the detection unit 53. The voice data and the detection data each include the user ID of the user A. Accordingly, the relay apparatus 7a receives the voice data or the detection data (S11-1). Similarly, the relay apparatus 7b receives the voice data or the detection data (S11-2). In addition, the relay apparatus 7c receives the voice data or the detection data (S11-3).

S12: In the relay apparatus 7a, the voice data relay unit 72 transmits (transfers) the voice data received from the wireless tag 5a to the history management apparatus 3, or the detection data relay unit 73 transmits (transfers) the detection data received from the wireless tag 5a to the history management apparatus 3 (S12-1). Similarly, in the relay apparatus 7b, the voice data relay unit 72 transmits (transfers) the voice data received from the wireless tag 5a to the history management apparatus 3, or the detection data relay unit 73 transmits (transfers) the detection data received from the wireless tag 5a to the history management apparatus 3 (S12-2). In addition, in the relay apparatus 7c, the voice data relay unit 72 transmits (transfers) the voice data received from the wireless tag 5a to the history management apparatus 3, or the detection data relay unit 73 transmits (transfers) the detection data received from the wireless tag 5a to the history management apparatus 3 (S12-3). Accordingly, the transmission/reception unit 31 of the history management apparatus 3 receives the voice data or the detection data.

S13: In the history management apparatus 3, the voice text generation unit 32 generates voice text from any one of the voice data received in process S12-1, the voice data received in process S12-2, and the voice data received in process S12-3.

S14: The position measurement unit 33 measures the position of the wireless tag 5a by three-point measurement based on the signal intensities of the voice data or the detection data received from the wireless tag 5a via the three relay apparatuses 7a, 7b, and 7c.

S15: When the transmission/reception unit 31 receives the voice data in process S12, the transmission/reception unit 31 stores the time (speech time) at which the voice data is received and the user ID (the user ID of a speaker) in a new record of the voice management DB 41. The voice text generation unit 32 stores the voice text generated in process S13 in the same new record. The position measurement unit 33 stores the position of the wireless tag 5a measured in process S14 in the same new record.

When the transmission/reception unit 31 receives the detection data in process S12, the transmission/reception unit 31 stores the user ID (the user ID of a marking person) included in the detection data in a record in which the same time as the reception time (marking time) of the detection data is managed in the voice management DB 41.

When the user A touches the wireless tag 5a of the user A while the user A speaks, the user ID of the speaker and the user ID of the marking person are the user ID of the same user A in the same record of the voice management DB 41. When the user B touches the wireless tag 5b of the user B while the user A speaks, the user ID of the speaker is the user ID of the user A, but the user ID of the marking person is the user ID of the user B in the same record of the voice management DB 41.

### Creation of Group Speech History

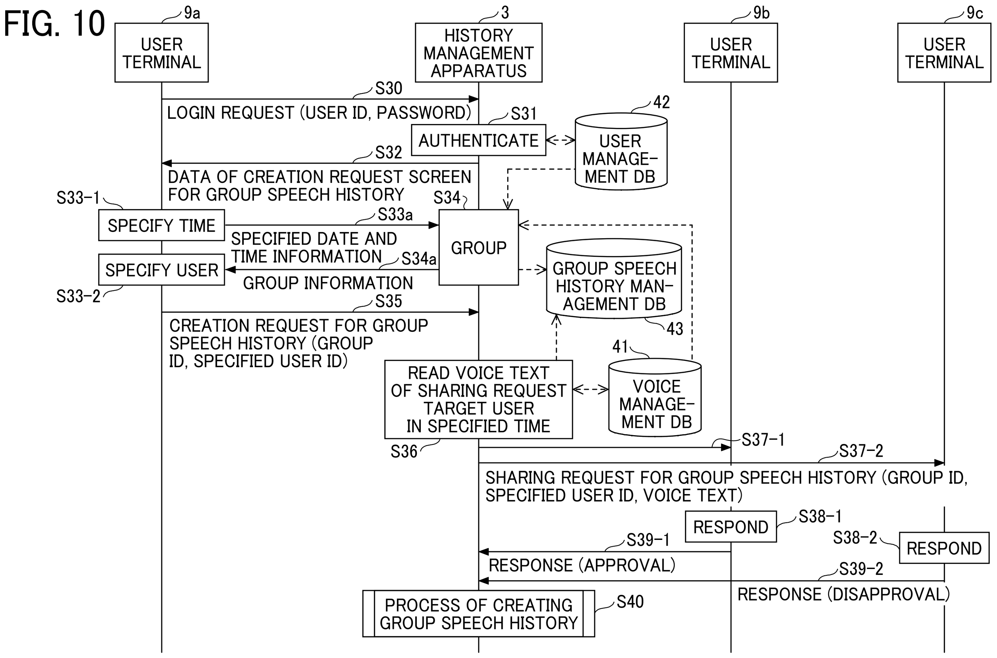

A process of creating a group speech history screen will be described with reference to FIG. 10. FIG. 10 is a sequence diagram illustrating the process of creating the group speech history screen according to the first embodiment. A case where the user A uses the user terminal 9a to request the history management apparatus 3 to create a group speech history will be described.

S30: The user terminal 9a transmits a login request to the history management apparatus 3. The request includes the user ID and the password of the user A. Accordingly, the transmission/reception unit 31 of the history management apparatus 3 receives the login request.

S31: In the history management apparatus 3, the authentication unit 34 searches the user management DB 42 using the pair of the user ID and the password received in process S30 as search keywords to perform login authentication based on whether the pair is managed.

S32: When it is determined that the user A is valid through the authentication in process S31, the transmission/reception unit 31 transmits data of a creation request screen for a group speech history to the user terminal 9a.

The "group speech history" indicates a history of a plurality of speeches of users in a group including the users who speak in the speech space S or a plurality of speeches of a user. The data of the creation request screen includes each pair of a user ID and a user name managed by the user management DB 42. Accordingly, the transmission/reception unit 91 of the user terminal 9a receives the data of the creation request screen for the group speech history. When it is determined that the user A is not valid in process S31, the transmission/reception unit 31 transmits information indicating a failure of the login to the user terminal 9a.

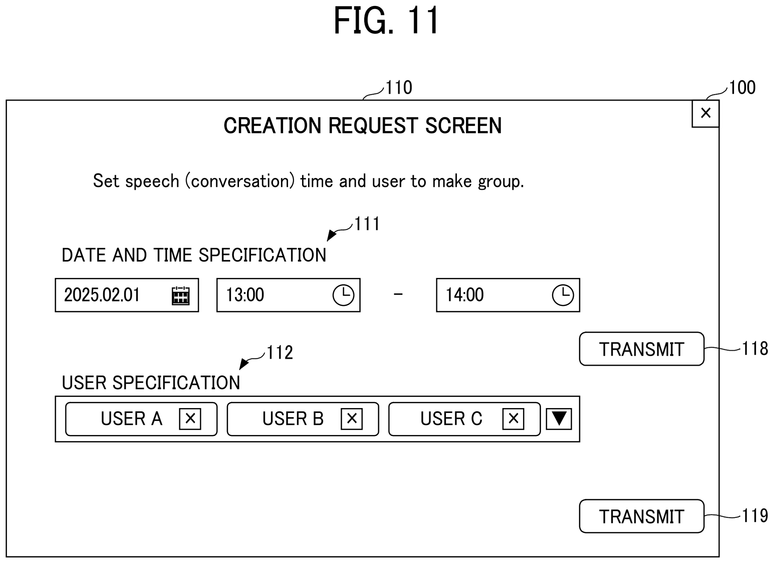

In the user terminal 9a, the display control unit 94 causes the display 907 to display a creation request screen 110 as illustrated in FIG. 11 based on the data in process S32. FIG. 11 is a view of the creation request screen 110 for a group speech (conversation) history.

As illustrated in FIG. 11, a "date and time specification" field 111, a "user specification" field 112, buttons 118 and 119, and a close button 100 for closing the screen are displayed on the creation request screen 110.

The "date and time specification" field 111 is a field for specifying a specific time corresponding to a voice text to be extracted among voice texts at respective times managed in the voice management DB 41. In the state in which the data of the creation request screen for the group speech history is received in process S32, the date and time for the specification is not displayed in the field 111 (blank state).

The "user specification" field 112 is a field for specifying a user (a user name relating to a user ID) corresponding to a voice text to be extracted among voice texts for respective speech user IDs managed in the voice management DB 41. In the "user specification" field 112, a user name can be selected from a pull-down menu. In the state in which the data of the creation request screen for the group speech history is received in process S32, the user name for the specification is not displayed in the field 112 (blank state).

S33-1: When the user A specifies a desired date and time (a date and a time zone) in the "date and time specification" field 111, the acceptance unit 92 accepts the specification of the desired date and time.

S33a: When the user A presses the transmit button 118, the acceptance unit 92 accepts a transmission request, and the transmission/reception unit 91 transmits specified date and time information indicating the specified date and time specified in the field 111 to the history management apparatus 3. Accordingly, the transmission/reception unit 31 of the history management apparatus 3 receives the specified date and time information.

S34: In the history management apparatus 3, the grouping unit 36 searches the voice management DB 41 using the specified date and time information received in process S33a as a search keyword to extract a record in which the specified time includes the speech time. The grouping unit 36 refers to the "position of wireless tag" in the extracted record and groups the user IDs of a plurality of speakers associated with a plurality of wireless tags 5 included in the same time zone within a predetermined distance as the same group.

The grouping unit 36 issues a group ID for identifying a group newly generated by the grouping, manages the group ID as a new record in the group speech history management DB 43, and manages a time zone (a start time and an end time) and user IDs in each group in association with each other.

The grouping unit 36 searches the user management DB 42 using the user IDs included in each group as search keywords to read corresponding user names.

S34a: The transmission/reception unit 31 transmits group information indicating the group ID, and the plurality of user IDs and the user names included in the group to the user terminal 9a for each group grouped in process S34. Accordingly, the transmission/reception unit 31 of the user terminal 9a receives the group information.

S33-2: In the user terminal 9a, as illustrated in FIG. 11, the display control unit 94 displays each group indicated by the group information and the user names in the group in a pull-down menu in the "user specification" field 112 based on the group information. When the user A specifies (selects) a desired group, the acceptance unit 92 accepts the specification of the desired group. The user names in each group are displayed with icons as illustrated in FIG. 11, and when the acceptance unit 92 accepts pressing of an icon "×," the display control unit 94 switches the display to a display in which the user name indicated by the accepted icon is excluded (deleted) from the group including the user name.

S35: When the user A presses the transmission button 119, the acceptance unit 92 accepts a transmission request, and the transmission/reception unit 91 transmits a creation request for a group speech history to the history management apparatus 3. The creation request includes the group ID of the group specified in process S33-2 and the user IDs corresponding to the user names. Accordingly, the transmission/reception unit 31 of the history management apparatus 3 receives the creation request for the group speech history. The user ID relating to the user name excluded in process S33-2 is not included in the creation request.

S36: In the history management apparatus 3, the group speech history creation unit 38 reads a record managed in the group speech history management DB 43 using the group ID received in process S35 as a search keyword, and deletes a record including a group ID not received in process S35 among the records created in process S34. In this case, the group speech history creation unit 38 also deletes a user ID other than the user ID received in process S35, that is, a user ID relating to a user name for which the icon "×" is pressed.

The group speech history creation unit 38 searches the voice management DB 41 based on the date and time (the start time and the end time) and the user ID included in the read record to read corresponding voice text.

S37-1: The transmission/reception unit 31 transmits a sharing request for the group speech history to the user terminal 9b of the user (in this case, the user B) other than the transmitting user (the user A) of process S35 among the user IDs received in process S35.

"Sharing of group speech history" indicates sharing of voice text relating to voice of a user who is the target for a sharing request in the group speech history.

The sharing request includes the group ID and the user IDs received in process S35, and the voice text read in process S36. Accordingly, the transmission/reception unit 91 of the user terminal 9b receives the sharing request.

S37-2: Similarly, the transmission/reception unit 31 transmits a sharing request for the group speech history to the user terminal 9c of the user (in this case, the user C) other than the transmitting user (the user A) of process S35 among the user IDs received in process S35. The sharing request includes the group ID and the user IDs received in process S35, and the voice text read in process S36. Accordingly, the transmission/reception unit 91 of the user terminal 9c receives the sharing request.

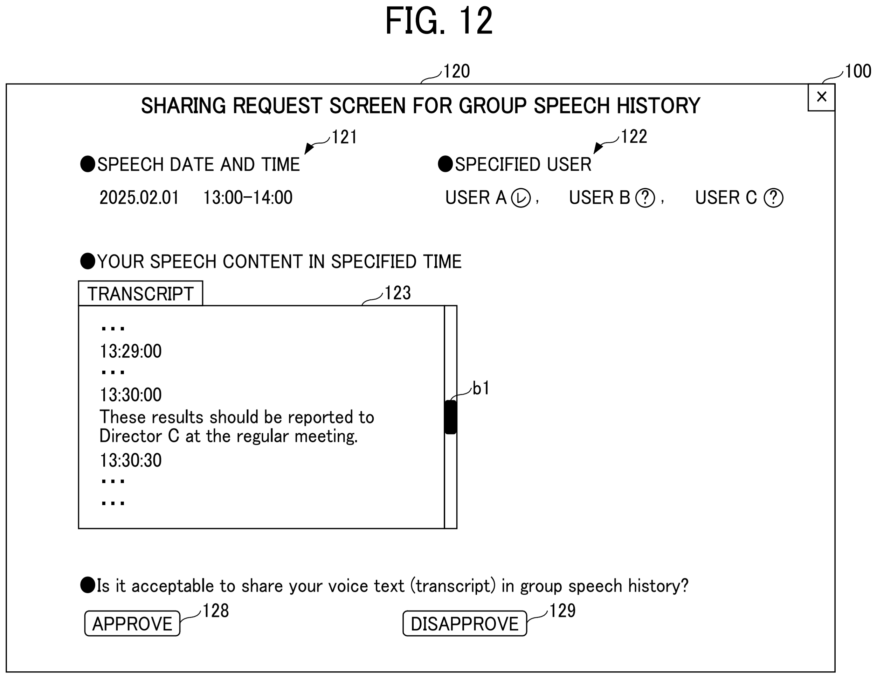

S38-1: In the user terminal 9b, the display control unit 94 of the user terminal 9b displays a sharing request screen 120 for a group speech history as illustrated in FIG. 12 on the display 907 based on the items of information (the specified time, all the user IDs and the user names thereof, and the voice text) received in process S37-1. FIG. 12 is a view of a group speech history screen 120 on which voice text of transcription is displayed.

As illustrated in FIG. 12, a "speech date and time" display field 121, a "specified user" display field 122, a "transcript" display field 123, an approve button 128, a disapprove button 129, and a close button 100 are displayed on the sharing request screen 120.

The "speech date and time" display field 121 indicates the date and time specified in the "date and time specification" field 111 in FIG. 11.

The "specified user" display field 122 indicates the user name specified in the "user specification" field 112 in FIG. 11. Since the creation request is received from the user A in process S35, a check icon indicating "approval" is automatically displayed for the requesting user A. When the user C already approves the sharing, a check icon indicating "approval" is displayed for the user C. In FIG. 12, since the users B and C neither approve nor disapprove, an icon indicating that approval or disapproval is uncertain is displayed.

The "transcript" display field 123 displays the voice text read in process S36 and transmitted in process S37-1. When the voice text to be displayed is long, a scroll bar b1 is displayed.

The user B refers to each item of information displayed on the sharing request screen 120 to determine whether the user B remembers participation in such conversation (speech). When the user B determines that the speech content (voice text) of the user B may be shared in the group speech history, the user B presses the approve button 128. When the user B determines that the user B does not want to share the speech content (voice text) of the user B in the group speech history, the user B presses the disapprove button 129. Accordingly, the acceptance unit 92 of the user terminal 9b accepts approval or disapproval. As illustrated in FIG. 1, assuming that the user B remembers that the user B has the conversation (speech) indicated by the voice text displayed in the "transcript" display field 123 together with the user A in the time zone displayed in the "speech date and time" display field 121, the user B presses the approve button 128 to give a response of approval.

S38-2: Similarly, the user terminal 9c displays the sharing request screen 120 for the group speech history as illustrated in FIG. 12 on the display 907 of the user terminal 9c. As illustrated in FIG. 1, assuming that the user C does not remember that the user C has the conversation (speech) indicated by the voice text displayed in the "transcript" display field 123 together with the user A in the time zone displayed in the "speech date and time" display field 121, the user C presses the disapprove button 129 to give a response of disapproval.

As means for the user terminal 9 to display the sharing request screen illustrated in FIG. 12, for example, the history management apparatus 3 transmits each item of information included in the sharing request to a dedicated application installed in the user terminal 9, and the dedicated application displays the creation request screen 110 in FIG. 11 or the sharing request screen 120 in FIG. 12. Alternatively, the transmission/reception unit 31 of the history management apparatus 3 may transmit an email to the user terminal 9 and access the sharing request screen 120 illustrated in FIG. 12 via a uniform resource locator (URL) included in the email from the user terminal 9.

S39-1: The transmission/reception unit 91 of the user terminal 9b transmits the response of process S38-1 to the history management apparatus 3 as a response to process S37-1. In this case, the response indicates approval. Accordingly, the transmission/reception unit 31 of the history management apparatus 3 receives the response from the user terminal 9b.

S39-2: Similarly, the transmission/reception unit 91 of the user terminal 9c transmits the response of process S38-2 to the history management apparatus 3 as a response to process S37-2. In this case, the response indicates disapproval. Accordingly, the transmission/reception unit 31 of the history management apparatus 3 receives the response from the user terminal 9c.

In process S38-1 or S38-2, the user B or C may correct the content of the voice text (transcript) illustrated in FIG. 12. In this case, the response includes the correction content of the voice text in addition to approval or disapproval. In the history management apparatus 3, the transmission/reception unit 31 corrects the corresponding voice text in the voice management DB 41.

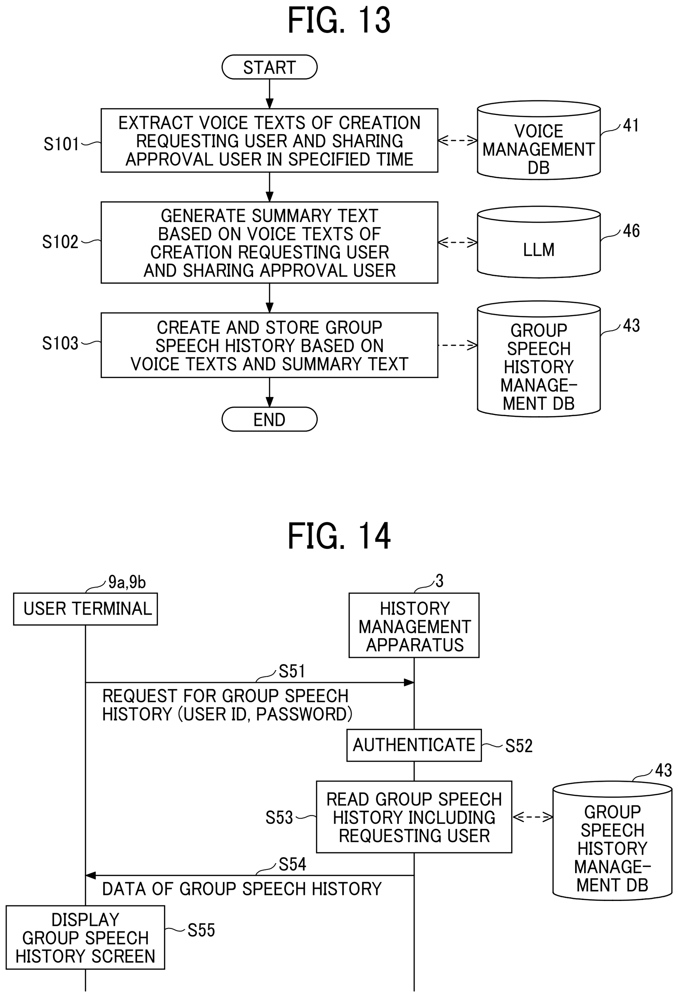

S40: The history management apparatus 3 performs a process of creating a group speech history. When there is no response from at least one of the user terminals 9b and 9c even though a predetermined period of time (for example, 12 hours) elapses after the history management apparatus 3 transmits the sharing request in process S37-1 or S37-2, the history management apparatus 3 may perform the process of creating the group speech history without waiting for the response. The process of creating the group speech history screen will be described with reference to FIG. 13. FIG. 13 is a flowchart presenting the process of creating the group speech history screen according to the first embodiment.

S101: With the specified time specified in process S33-1, the group speech history creation unit 38 searches the voice management DB 41 using the user IDs of a creation requesting user (in this case, the user A) and a sharing approval user (in this case, the user B) as search keywords to extract the voice texts of the creation requesting user and the sharing approval user in the specified time. That is, the group speech history creation unit 38 adds the voice text indicating the speech content of the user B who transmits the response indicating approval to the speech history of the group, but does not add the voice text indicating the speech content of the user C who transmits the response indicating disapproval to the speech history of the group.

S102: The summary text generation unit 39 generates summary text in which the content of the conversation (speech) between the user A and the user B is summarized using the LLM 46 based on the voice texts of the creation requesting user (in this case, the user A) and the sharing approval user (in this case, the user B).

S103: The group speech history creation unit 38 creates a group speech history based on the voice texts read in process S101 and the summary text generated in process S102, and stores the group speech history in the group speech history management DB 43. In this case, the group speech history creation unit 38 manages the voice text in association with the user name of the user who is the speaker and the speech time (the reception time of the voice data received by the transmission/reception unit 31). The group speech history creation unit 38 manages each text of the summary text in association with the time of speech made by the user (the reception time of the voice data received by the transmission/reception unit 31).

Thus, the process of creating the group speech history is ended.

### Creation of Group Speech History Screen

A process of creating a group speech history screen will be described with reference to FIGS. 14 to 16. FIG. 14 is a sequence diagram illustrating the process of creating the group speech history screen.

S51: With an operation performed by the user A, the user terminal 9a transmits a request for a group speech history to the history management apparatus 3. The request includes the user ID and the password of the user A. Accordingly, the transmission/reception unit 31 of the history management apparatus 3 receives the request.

S52: In the history management apparatus 3, the authentication unit 34 searches the user management DB 42 using the pair of the user ID and the password received in process S51 as search keywords, and performs login authentication based on whether the pair is managed.

S53: When it is determined that the user A is valid through the authentication in process S52, the transmission/reception unit 31 searches the group speech history management DB 43 using the user ID received in process S51 as a search keyword to read data of a group speech history including the requesting user (in this case, the user A).

S54: The transmission/reception unit 31 transmits the data of the group speech history read in process S53 to the user terminal 9a. Accordingly, the transmission/reception unit 91 of the user terminal 9a receives the data of the group speech history.

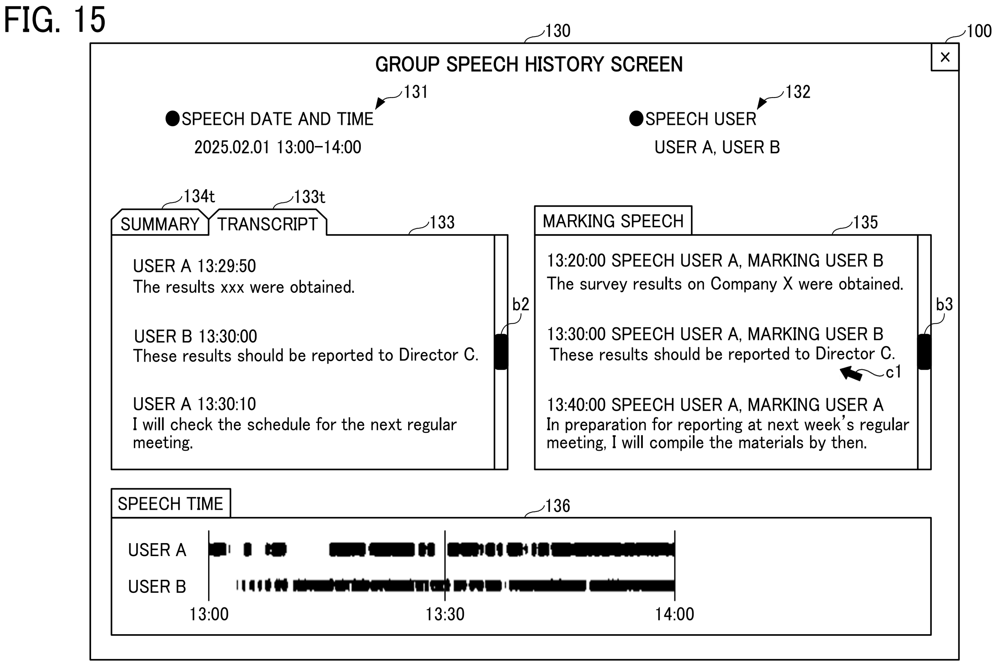

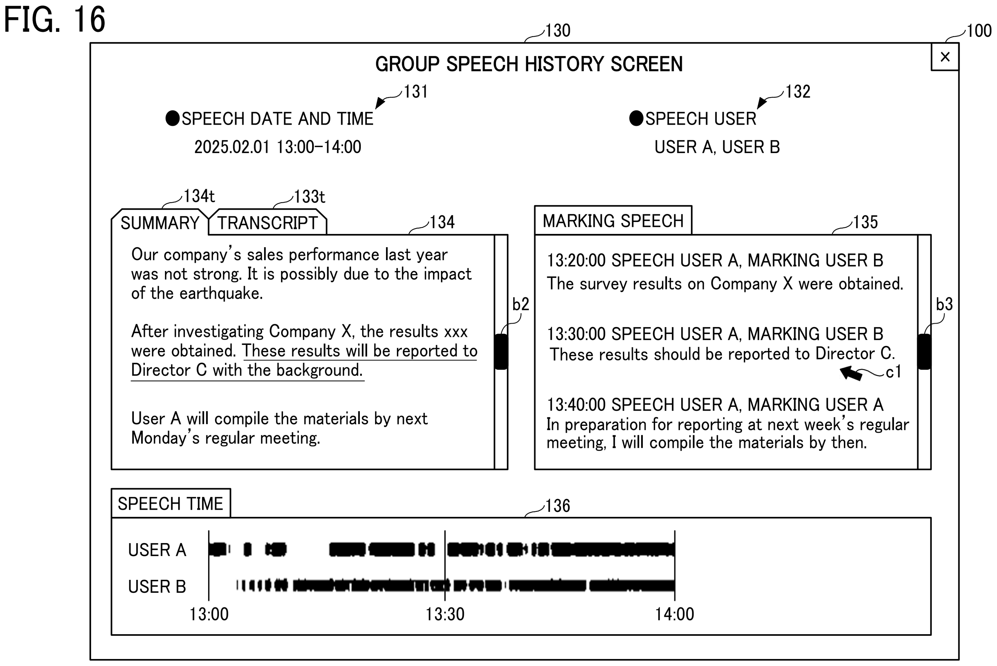

S55: In the user terminal 9a, the display control unit 94 displays a group speech history screen 130 illustrated in FIG. 15 or 16 on the display 907. FIG. 15 is a view of the group speech history screen 130 on which voice text of transcription is displayed. FIG. 16 is a view of the group speech history screen 130 on which summary text is displayed.

As illustrated in FIG. 15, on the group speech history screen 130, a "speech date and time" display field 131, a "speech user" display field 132, display fields 133 and 134 relating to voice text, a display field 135 relating to marking speech, a display field 136 of speech time, and a close button 100 are displayed.

The display field 131 indicates the date and time specified in the "date and time specification" field 111 in FIG. 11, similarly to the "speech date and time" display field 121.

The display field 132 indicates the user name of the requesting user (in this case, the user A) of process S35 and the user name of the user (in this case, the user B) who gives a response of approval to process S37-1 or S37-2 in the "specified user" display field 122.

The display field 133 is a sheet for displaying voice text (transcript), and is displayed when a tab 133t is selected. The display field 133 is initially displayed. When the voice text (transcript) to be displayed is long, a scroll bar b2 is displayed. In the display field 133, a speaker name, a speech time, and voice text indicating speech content are displayed as a set in time series.

The display field 134 illustrated in FIG. 16 is a summary sheet for displaying summary text, and is displayed when a tab 134t is selected. When the summary text to be displayed is long, the scroll bar b2 is displayed.

In the display field 135, a speech time, a speaker name, a user name of a marking person, and voice text based on the speaker are displayed as a set in time series. When the display content is long, a scroll bar b3 is displayed.

Each set has a link selectable with a cursor c1. When a portion (the speech time, the speaker name, the user name of the marking person, or the voice text) in the set is selected with the cursor c1, the acceptance unit 92 accepts the speech time. As illustrated in FIG. 16, the display control unit 94 changes the display mode, for example, displays an underline in the summary text portion corresponding to the speech time. In this case, as illustrated in FIG. 8, since the speech time is added to the summary text in advance, the display control unit 94 can identify the summary text portion (underlined portion) corresponding to the speech time.

When the user B having conversation (speech) with the user A in the speech space S illustrated in FIG. 1 transmits a request for a group speech history from the user terminal 9b in process S51, the history management apparatus 3 performs processes similar to processes S52 to S54.

With the present embodiment as described above, even when a recording facility for speech is not prepared in advance in a speech space, a speech history of one or more users can be grouped and managed. For example, even though the user does not prepare for a conference, conversation (speech) that spontaneously starts in a shared space or a hallway of an office can be collected in minutes later (see FIGS. 15 and 16). Even when a user makes a plurality of speeches by incidentally remembering or making a proposal in the same time zone, the plurality of speeches can be collected in minutes later. As described above, even when a recording facility for speech is not prepared in advance in the speech space or even when a plurality of speeches incidentally occur, minutes can be collectively created later.

As illustrated in FIG. 6, with the management of the user ID of the marking person, for example, in a case where the user B is interested in the speech, or the speech of the user A remains in impression or sympathy, and thus there is speech content that the user B wants to look back and smoothly check in minutes later, the case can be handled with the touch (marking operation) of the user B on the wireless tag 5.

### Second Embodiment

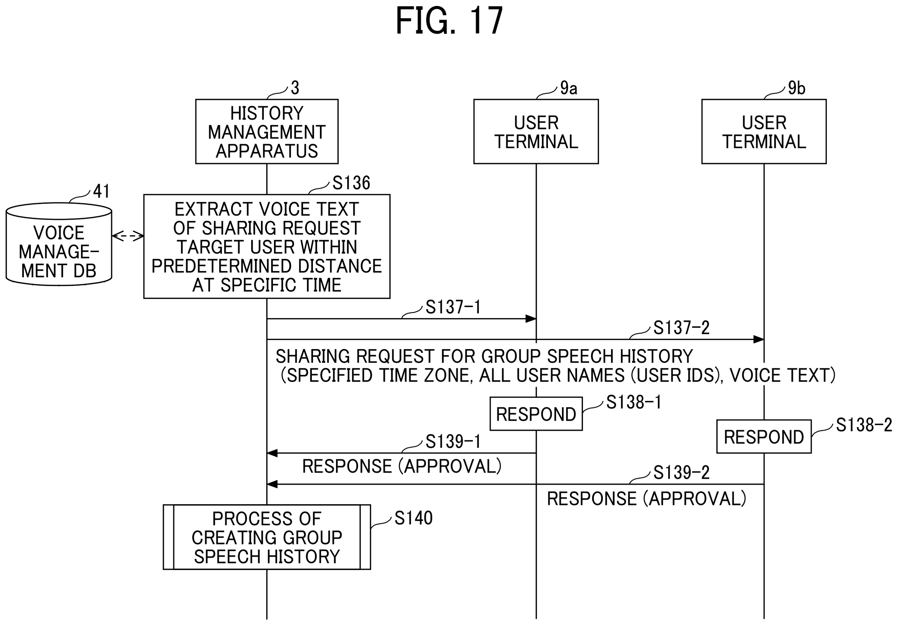

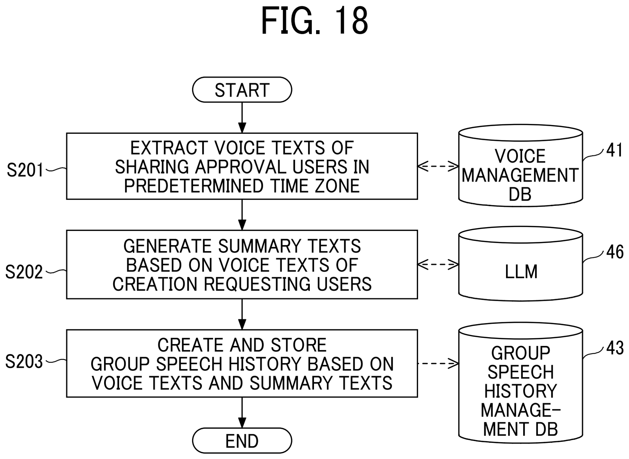

A second embodiment will be described with reference to FIGS. 17 and 18. FIG. 17 is a sequence diagram illustrating a process of creating a group speech history screen according to the second embodiment. FIG. 18 is a flowchart presenting the process of creating the group speech history screen according to the second embodiment. FIGS. 17 and 18 correspond to FIGS. 10 and 13 of the first embodiment, respectively.

While the history management apparatus 3 starts creation of the group speech history in response to reception of the creation request for the group speech history from the user terminal 9a as illustrated in FIG. 10 in the first embodiment, the history management apparatus 3 automatically starts creation of the group speech history in the second embodiment. Since the second embodiment has a hardware configuration and a functional configuration similar to those of the first embodiment, differences in process will be described. In the second embodiment, FIG. 17 is a modification of FIG. 10, and FIG. 18 is a modification of FIG. 13.

S136: In the history management apparatus 3, the transmission/reception unit 31 extracts, at a specific time (for example, 0:00 when the date changes), voice text of a user who is the target for a sharing request within a predetermined distance from the voice management DB 41. In this case, the transmission/reception unit 31 searches for the speech time and the position of the wireless tag in the history for a certain period of time before the specific time (for example, 24 hours before 0:00 when the date changes) in the voice management DB 41, and extracts the user ID and the voice text of a speaker within a predetermined range (for example, a range having a radius of 1 m on the same floor) based on the relationship between the positions of the wireless tags 5a and 5b for a predetermined period of time (for example, 10 minutes) or more. The speaker is the user who is the target for the sharing request in process S137-1 or S137-2.

S137-1: The transmission/reception unit 31 specifies a target for a sharing request (in this case, the user terminal 9a) and transmits a sharing request for a group speech history to the target for the sharing request based on the user ID of the user (in this case, the user A) extracted in process S136, as in process S37-1. The sharing request includes items of information (a specific time zone, all user IDs and user names thereof, and voice text) obtained when the extraction process is performed in process S136. Accordingly, the transmission/reception unit 91 of the user terminal 9a receives the sharing request. The "specific time zone" in the first embodiment is the specified time (see FIG. 10) specified by the user A in process S33-1.

S137-2: Similarly, the transmission/reception unit 31 specifies a target for a sharing request (in this case, the user terminal 9b) and transmits a sharing request for a group speech history to the target for the sharing request based on the user ID of the user (in this case, the user B) extracted in process S136, as in process S37-1. The sharing request includes the items of information (the specific time zone, all the user IDs and the user names thereof, and the voice text) obtained when the extraction process is performed in process S136. Accordingly, the transmission/reception unit 91 of the user terminal 9b receives the sharing request.

S138-1: In the user terminal 9a, the display control unit 94 of the user terminal 9a displays a sharing request screen 120 for a group speech history as illustrated in FIG. 12 on the display 907 based on the items of information (the specified time zone (specified time), all the user IDs and the user names thereof, and the voice text) received in process S137-1. As illustrated in FIG. 1, assuming that the user A remembers that the user A has the conversation (speech) based on the content of the voice text displayed in the "transcript" display field 123 together with the user B in the time zone displayed in the "speech date and time" display field 121, the user A presses the approve button 128 to give a response of approval.

S138-2: Similarly, the user terminal 9b displays a sharing request screen 120 for a group speech history as illustrated in FIG. 12 on the display 907 of the user terminal 9b. As illustrated in FIG. 1, assuming that the user B remembers that the user B has the conversation (speech) based on the content of the voice text displayed in the "transcript" display field 123 together with the user A in the time zone displayed in the "speech date and time" display field 121, the user B presses the approve button 128 to give a response of approval.

S139-1: The transmission/reception unit 91 of the user terminal 9a transmits a response of process S138-1 to the history management apparatus 3 as a response to process S137-1. In this case, the response indicates approval. Accordingly, the transmission/reception unit 31 of the history management apparatus 3 receives the response from the user terminal 9b.

S139-2: Similarly, the transmission/reception unit 91 of the user terminal 9b transmits a response of process S138-2 to the history management apparatus 3 as a response to process S137-2. In this case, the response indicates approval. Accordingly, the transmission/reception unit 31 of the history management apparatus 3 receives the response from the user terminal 9b.

In process S138-1 or S138-2, the user A or B may correct the content of the voice text (transcript) illustrated in FIG. 12. In this case, the response includes the correction content of the voice text (transcript) in addition to approval or disapproval. In the history management apparatus 3, the transmission/reception unit 31 corrects the corresponding voice text in the voice management DB 41.

S140: The history management apparatus 3 performs a process of creating a group speech history. The process of creating a group speech history screen will be described with reference to FIG. 18. When there is no response from at least one of the user terminals 9a and 9b even though a predetermined period of time (for example, 12 hours) elapses after the history management apparatus 3 transmits the sharing request in process S137-1 or S137-2, the history management apparatus 3 may perform the process of creating the group speech history without waiting for the response.

S201: The group speech history creation unit 38 searches the voice management DB 41 using the user IDs of the sharing approval users (in this case, the users A and B) as search keywords in a specific time zone (for example, 13:00:00 to 14:00:00) to extract voice texts of the sharing approval users in the specific time zone. The "specific time zone" in the second embodiment is the specific time zone automatically extracted in process S136 (see FIG. 17).

S202: The summary text generation unit 39 generates summary texts in which the content of conversation (speech) between the user A and the user B is summarized using the LLM 46 based on the voice texts of the sharing approval users (in this case, the users A and B).

S203: The group speech history creation unit 38 creates a group speech history based on the voice texts read in process S201 and the summary texts generated in process S202, and stores the group speech history in the group speech history management DB 43. In this case, the group speech history creation unit 38 manages the voice text in association with the user name of the user who is the speaker and the speech time (the reception time of the voice data received by the transmission/reception unit 31). The group speech history creation unit 38 manages each text of the summary text in association with the time of speech made by the user (the reception time of the voice data received by the transmission/reception unit 31).

In the second embodiment, in order to implement full automation, processes S137-1 to S139-1 or processes S137-2 to S139-2 may be omitted, and the history management apparatus 3 may automatically perform the process of creating the group speech history without obtaining approval of each user.

Thus, the process of creating the group speech history is ended.

Since the subsequent processes are similar to process S51 and the subsequent processes in the first embodiment, the description thereof will be omitted.

With the present embodiment as described above, in addition to the advantageous effect of the first embodiment, the history management apparatus 3 can automatically start the work process on the group speech history at the specific time (for example, 0:00 when the date changes) even though the user A does not make the creation request for the group conference history as illustrated in FIG. 10.

While the position measurement unit 33 measures the position of the wireless tag 5 based on the signal intensity in the above-described embodiment, the position measurement is not limited thereto. For example, a Global Navigation Satellite System (GNSS) receiver of GPS or an Indoor MEssaging System (IMES) receiver that is an indoor GPS may be built in the wireless tag 5, and the transmission/reception unit 31 may acquire the position information indicating the position of the wireless tag 5 from the wireless tag 5.

In FIG. 6, the voice management DB 41 may further manage a start flag and an end flag indicating the specified time (the start time and the end time) of the group speech history. In this case, when the user performs a touch of a different operation such as a first long press on the wireless tag 5, the wireless tag 5 transmits detection data indicating that group speech is to be started to the history management apparatus 3 via the detection data relay unit 73 of the relay apparatus 7, and the transmission/reception unit 31 stores the start flag in the voice management DB 41 and manages the start flag. Thereafter, when the user performs a touch of a different operation such as a second long press on the wireless tag 5, the wireless tag 5 transmits detection data indicating that the group speech is to be ended to the history management apparatus 3 via the detection data relay unit 73 of the relay apparatus 7, and the transmission/reception unit 31 stores the end flag in the voice management DB 41 and manages the end flag.

While the position information of the speaker (wireless tag 5) is used to group the speakers in the second embodiment (see process S136), a specific speaker can be grouped without using the position information such as when the installation location is limited, for example, when the relay apparatus 7 is installed at one location in a building.

One of the different wireless tags 5a and 5b may include the voice data generation unit 52 but not include the detection unit 53, and the other wireless tag may not include the voice data generation unit 52 but include the detection unit 53. Alternatively, one of the different wireless tags 5a and 5b may include the voice data generation unit 52 and the detection unit 53, and the other wireless tag may include the voice data generation unit 52 but not include the detection unit 53.

Each of the above-described programs can be recorded in (non-transitory) carrier means and distributed, or can be provided via the communication network N such as the Internet.

The CPU 301, 501, 701, or 901 serving as a processor may be one processor or include multiple processors.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A history management apparatus (3) for managing a history of speech of a user, comprising:
a reception unit (31) configured to receive voice data transmitted by a communication terminal that collects sound;
a voice text generation unit (32) configured to generate a voice text based on the voice data;
a position measurement unit (33) configured to measure a position of the communication terminal based on the voice data;
a grouping unit (36) configured to group a plurality of voice texts relating to the voice data transmitted by the communication terminal into a group in response to a speech being made in a specific time zone and in a predetermined range based on the position of the communication terminal; and
a creation unit (38) configured to create a speech history of the group.

2. The history management apparatus (3) according to claim 1,
wherein the voice data received by the reception unit (31) are transmitted by a plurality of communication terminals of a plurality of users, and
wherein the creation unit (38) is configured to group the plurality of voice texts relating to the voice data transmitted by the plurality of communication terminals into the group in response to the speech made by the plurality of users in the specific time zone to create the speech history of the group.

3. The history management apparatus (3) according to claim 2, further comprising a transmission unit (31) configured to transmit a creation request for creating the speech history of the group to a user terminal,
wherein the reception unit (31) is configured to receive information on the specific time zone and a plurality of user identification information each for identifying each of the plurality of users transmitted by the user terminal, and
wherein the creation unit (38) is configured to group the plurality of voice texts indicating speech content of the plurality of users each identified with the user identification information in the specific time zone to create the speech history of the group.

4. The history management apparatus (3) according to claim 3,
wherein the reception unit (31) is configured to receive another user identification information for identifying another user transmitted by the user terminal,
wherein the transmission unit (31) is configured to transmit the plurality of voice texts to another user terminal identified with said another user identification information to transmit a sharing request for obtaining approval for sharing of a specific voice text indicating speech content of said another user in the speech history of the group, and
wherein, when the reception unit (31) receives a response indicating that the sharing is approved from said another user terminal, the creation unit (38) is configured to add the specific voice text to the speech history of the group.

5. The history management apparatus (3) according to claim 3,
wherein the reception unit (31) is configured to receive another user identification information for identifying another user transmitted by the user terminal,
wherein the transmission unit (31) is configured to transmit the plurality of voice texts to another user terminal identified with said another user identification information to transmit a sharing request for obtaining approval for sharing of a specific voice text indicating speech content of said another user in the speech history of the group, and
wherein, when the reception unit (31) receives a response indicating that the sharing is disapproved from said another user terminal, the creation unit (38) is configured to not add the specific voice text to the speech history of the group.

6. The history management apparatus (3) according to claim 1, further comprising a summary text generation unit (39) configured to generate a summary text from the plurality of voice texts to be grouped using a trained machine learning model,
wherein the creation unit (38) is configured to add the summary text to the speech history of the group.

7. A communication system (1) comprising:
the history management apparatus (3) according to any one of claims 1 to 6; and
the communication terminal (5).

8. A history management method performed by a computer that manages a history of speech of a user, the method comprising:
receiving (S11, S12) voice data transmitted by a communication terminal that collects sound;
generating (S13) a voice text based on the voice data;
measuring (S14) a position of the communication terminal based on the voice data;
grouping (S34) a plurality of voice texts relating to the voice data transmitted by the communication terminal into a group in response to a speech being made in a specific time zone and in a predetermined range based on the position of the communication terminal; and
creating (S40) a speech history of the group.

9. Carrier means carrying computer readable code for controlling the computer to carry out the method of claim 8.
